# EUROPEAN PATENT SPECIFICATION

(11) **EP 2 822 233 B1**
(45) Date of publication and mention of the grant of the patent: **07.12.2016**
(21) Application number: 12869668.9
(22) Date of filing: 22.10.2012
(51) Int. Cl.: H04L 12/417, H04L 12/18

(54) **COMMUNICATION DEVICE AND COMMUNICATION METHOD**
KOMMUNIKATIONSVORRICHTUNG UND KOMMUNIKATIONSVERFAHREN
DISPOSITIF DE COMMUNICATION ET PROCÉDÉ DE COMMUNICATION

(30) Priority: 02.03.2012 US 201261605759 P
(43) Date of publication of application: 07.01.2015
(73) Proprietor: LSIS Co., Ltd., Dongan-Gu, Anyang Gyeonggi-Do 431-080 (KR)
(72) Inventor: LEE, Sung Han, Anyang-si Gyeonggi-do 431-849 (KR); KWON, Dae Hyun, Anyang-si Gyeonggi-do 431-830 (KR); OH, Joon Seok, Gunpo-si Gyeonggi-do 435-778 (KR)
(74) Representative: Lang, Johannes
(86) International application number: PCT/KR2012/008655
(87) International publication number: WO 2013/129753

(56) References cited:
- EP-A2- 1 427 132
- JP-A- H07 203 035
- KR-A- 20030 084 162
- KR-A- 20040 036 279
- KR-A- 20080 020 807
- US-A- 5 968 154
- US-A- 6 070 193

## Description

### TECHNICAL FIELD

The present disclosure relates to a communication device and a communication method, and more particularly, to a safety communication device and a safety communication method.

### BACKGROUND ART

Solutions for safety communication to be used in industrial fields are currently sought. In particular, industrial control systems are required to maintain a prescribed or higher level of integrity of information transferred via a network in order to secure the safety of workers, avoid threats to environment and prevent the occurrence of safety-related problems.

In order to satisfy such integrity requirements, industrial control systems are required to treat problems about corruption, unintended repetition, incorrect sequence, loss, unacceptable delay, insertion, masquerade and addressing.

Regarding the problem of corruption, industrial control systems should be able to determine whether an error occurs in data being transferred, with a prescribed or higher level of probability.

Regarding the problem of unintended repetition, industrial control systems should be able to determine whether data repetition which is not maliciously intended by a person occurs normally, with a prescribed or higher level of probability.

Regarding the problem of incorrect sequence, industrial control systems should be able to determine whether a sequence of transmission of data is changed, with a prescribed or higher level of probability.

Regarding the problem of loss, industrial control systems should be able to determine whether a part of transmitted data is damaged, with a prescribed or higher level of probability.

Regarding the problem of unacceptable delay, industrial control systems should be able to determine whether an unacceptable delay occurs in transmission of data, with a prescribed or higher level of probability.

Regarding the problem of insertion, industrial control systems should be able to determine whether unintended data is inserted while transmitting data, with a prescribed or higher level of probability.

Regarding the problem of masquerade, industrial control systems should be able to determine whether data is changed maliciously by a person, with a prescribed or higher level of probability.

Regarding the problem of addressing, industrial control systems should be able to determine whether data is transmitted to a right receiver, with a prescribed or higher level of probability.

IEC 61508 represents a probability of error occurrence using SIL as shown in table 1 below.

**[Table 1]**

| | |
|---|---|
| SIL4 | >= 10⁻⁹, < 10⁻⁸ |
| SIL3 | >= 10⁻⁸, **<** 10⁻⁷ |
| SIL2 | >= 10⁻⁷, < 10⁻⁵ |
| SIL1 | >= 10⁻⁶, < 10⁻⁵ |

For example, to satisfy SIL3, the probability of error occurrence should satisfy 10⁻⁹.

However, it is difficult for current Ethernet frame structures to satisfy the integrity requirements of industrial control systems.

US6070193A discloses, in a communication network comprising at least one communication medium and a plurality of nodes, each node having a unique identifier associated therewith that is transmitted as part of each message transmitted by said node, a method for transmitting signals.

### DISCLOSURE OF THE INVENTION

### TECHNICAL PROBLEM

Embodiments provide a communication device and a communication method preventing an unnecessary message that may be generated on a network of an industrial control system from being transferred, and improving network performance.

### TECHNICAL SOLUTION

The present invention is defined in the appended independent claim to which reference should be made. Advantageous features are set out in the appended dependent claims.

### ADVANTAGEOUS EFFECTS

According to embodiments, network performance can be improved by preventing unnecessary messages from being transferred.

### BRIEF DESCRIPTION OF THE DRAWINGS

Fig. 1 is a block diagram illustrating a safety communication device according to an embodiment.
Fig. 2 is a ladder diagram illustrating a communication method according to an embodiment.
Fig. 3 is a view for explaining a unique identifier according to an embodiment.
Fig. 4 is a ladder diagram illustrating a communication method according to another embodiment.

### MODE FOR CARRYING OUT THE INVENTION

Reference will now be made in detail to a mobile terminal according to embodiments of the present disclosure, examples of which are illustrated in the accompanying drawings. In the following description, usage of suffixes such as 'module' and 'unit' used for referring to elements is given merely to facilitate explanation of the present invention, without having any significant meaning by itself.

Hereinafter, a safety communication device and a safety communication method according to embodiments of the present invention will now be described with reference to the accompanying drawings.

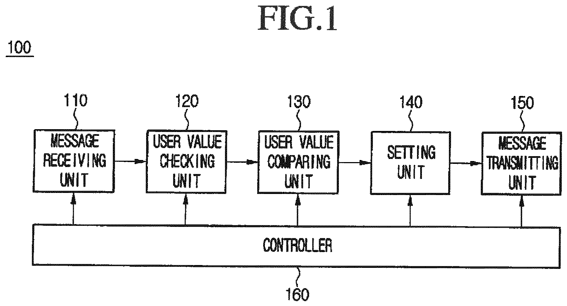

Fig. 1 is a block diagram illustrating a safety communication device according to an embodiment.

As illustrated in Fig. 1, a safety communication device 100 may include a message receiving unit 110, a user value checking unit 120, a user value comparing unit 130, a setting unit 140, a message transmitting unit 150, and a controller 160.

The message receiving unit 110 may receive a request message or a response message from another safety communication device.

The user value checking unit 120 may check a user value of the other safety communication device from the request message. In an embodiment, the user value may mean any one of a device ID or a media access control (MAC) address, and may be a value pre-determined by setting.

The user value comparing unit 130 may compare the checked user value with a user value of its own. In detail, the user value comparing unit 130 may compare which value of the user value of the other safety communication unit and the user value of its own is the greater.

The setting unit 140 may set the safety communication device 100 as an initiator or a respondent. The setting unit 140 may perform a role of setting the initiative between safety communication devices.

In detail, a safety communication device set as an initiator may neglect a request message, even when the request message is received from a safety communication device set as a respondent, and receive a corresponding response message by transmitting a request message received from the safety communication device set as the respondent to another safety communication device.

The safety communication device set as the respondent may receive a request message from the safety communication device set as the initiator and transmit a response message corresponding to the received request message to the safety communication device set as the initiator. The safety communication device set as the respondent may transmit a request message to the safety communication message set as the initiator, but may not receive a response message corresponding thereto.

The message transmitting unit 150 may transmit a request message or a response message for establishing a connection to another safety communication device.

The controller 160 may control an overall operation of the safety communication device 100. In particular, the controller 160 of the safety communication device 100 set as the initiator may neglect a request message for connection establishment, even when the request message is received from the safety communication device 100 set as the respondent.

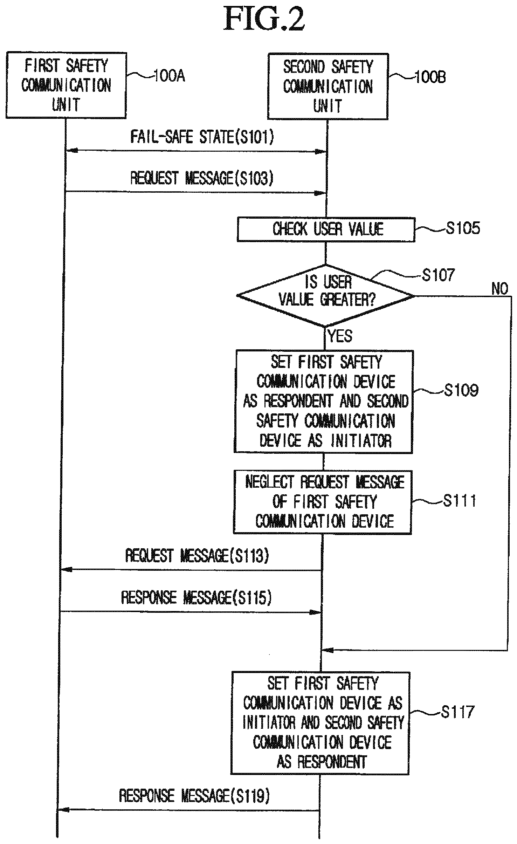

Fig. 2 is a ladder diagram illustrating a communication method according to an embodiment.

A phase of performing communication between safety communication devices includes a connection phase and a data transmitting phase.

The connection phase is a phase for establishing a connection to each other before transmitting substantial data for performing operations between the safety communication devices, and the data transmitting phase may mean a phase of transmitting substantial data for performing operations after completing the connection phase.

The connection phase may include a reset state, a connection state, and a parameter state.

The reset state may be a state that a connection between the safety communication devices is initialized and prepared after a communication error is detected between the safety communication devices.

The connection state may be a state that the safety communication devices identify each other for connection.

The parameter state may mean a state that safety communication devices complete the connection state by transmitting and receiving parameters of safety related communication and parameters of safety related application with each other, and prepares to enter the data transmitting phase.

A communication method between the safety communication devices 100 according to an embodiment may be a process achieved in the connection phase between the connection phase and the data transmitting phase.

In particular, the communication method between the safety communication devices 100 according to an embodiment illustrated in Fig. 2 may be a process that may be achieved in the reset state of the connection phase. In other words, in this case, the safety communication devices 100 are all in the reset state.

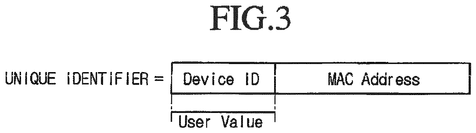

The message transmitting unit 110 of a first safety communication device 100A may transmit a request message to a second safety communication device 100B (operation S101). In an embodiment, the request message may include a unique identifier. When the request message includes the unique identifier, operation 101 may be a process achieved in the reset state of the connection phase. Regarding the unique identifier, description is made in detail with reference to Fig. 3.

Fig. 3 is a view for explaining a unique identifier according to an embodiment.

As illustrated in Fig. 3, the unique identifier according to an embodiment may be formed of a combination of a user value and a MAC address.

The user value may be any one of a pre-designated arbitrary value, a value in a specific range designated by a user's setting, an identifier of the safety communication device, and an address of the safety communication device.

The user value illustrated in Fig. 3 may be a value of a device ID. Here, the device ID may mean an ID of the safety communication device.

The MAC address may include information for an Ethernet access.

The size of the unique identifier according to an embodiment may be, but is not limited to, 64 bits.

The size of the device ID may be 16 bits, and the size of the MAC address may be 48 bits. But they are not limited hereto.

Referring to Fig. 2 again, the user value checking unit 120 of the second safety communication device 100B may check a user value by using a received request message (operation 103). Here, the user value of the safety communication device may mean any one of the device ID, MAC address, or a combination thereof, and may be a value determined in advance by setting.

The user value comparing unit 130 of the second safety communication device 100B compares the user value of the first safety communication device 100A and the user value of the second safety communication device 100B, and checks which user value of the two is the greater (operation S105).

When it is checked that the user value of the second safety communication device 100B is the greater, the setting unit 140 of the second safety communication device 100B may set the first safety communication device 100A as a respondent and the second safety communication device 100B as an initiator (operation S107). In detail, the setting unit of the second safety communication device 100B may set which takes the communication initiative according to the comparison of the user values.

In detail, the setting unit 140 of the second safety communication device 100B may set a safety communication device having the greater user value as the initiator and the smaller user value as the respondent according to the user value comparison.

The setting of the initiator and the respondent is a task for setting which takes the communication initiative between the safety communication devices. When the safety communication device set as the initiator transmits a request message to the safety communication device set as the respondent, the safety communication device set as the respondent may transmit a response message corresponding to the request message to the safety communication device set as the initiator. However, when the safety communication device set as the respondent transmits a request message to the safety communication device set as the initiator, the safety communication device set as the initiator may neglect the request message, and transmit a request message to the safety communication device set as the respondent and receive a response message corresponding thereto.

In an embodiment, when the user value of the first safety communication device 100A is 5, and the user value of the second safety communication device 100B is 10, the setting unit of the second safety communication device 100B may set the first safety communication device 100A as a respondent and the second safety communication device 100B as an initiator.

The controller 160 of the second safety communication device 100B neglects the received request message of the first safety communication device 100A according to the setting by the setting unit (operation S109).

The message transmitting unit 110 of the second safety communication device 100B transmits a request message to the first safety communication device 100A (operation S111), and the message receiving unit 150 of the second safety communication device 100b may receive a response message corresponding to the request message (operation S113). Accordingly, the first and second safety communication devices 100A and 100B complete establishment of a connection with each other, and become in a state where data is normally transmitted and received to and from each other.

Furthermore, when it is checked that the user value of the second safety communication device 100B is the smaller, the setting unit 140 of the second safety communication device 100B sets the first safety communication device 100A as the initiator and the second safety communication device 100B as the respondent (operation S115).

The message transmitting unit 110 of the second safety communication device 100B transmits a response message corresponding to the request message of the first safety communication device 100A (operation S117). Accordingly, the first and second safety communication devices 100A and 100B complete connection establishment with each other and become in a state where data is normally transmitted and received to and from each other.

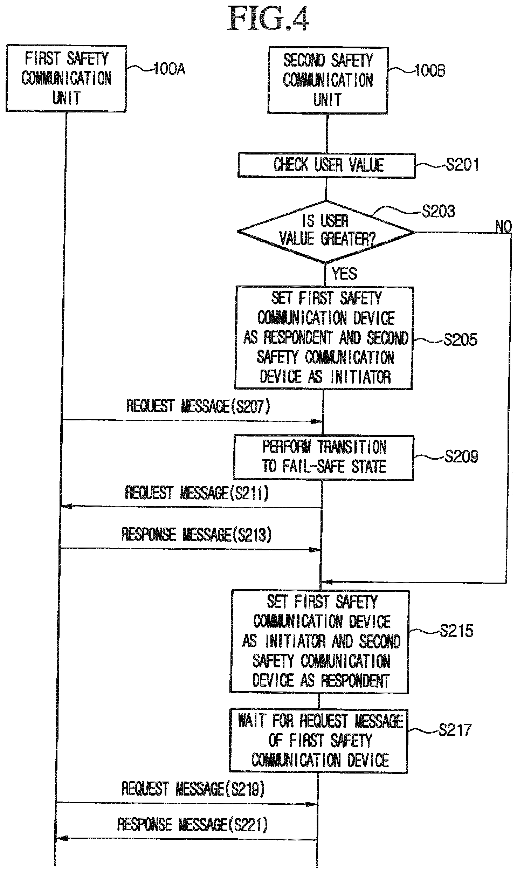

Fig. 4 is a ladder diagram illustrating a communication method according to another embodiment.

A communication method between the safety communication devices 100 according to an embodiment may be a process achieved in the connection state between the connection phase and the data transmitting phase.

In particular, the communication method between the safety communication devices 100 according to an embodiment illustrated in Fig. 4 may be a process achieved in a state where only any one of the safety communication devices 100 is in the reset state in the connection phase or both of them are in the reset state.

Referring to Fig. 4, the user value checking unit 120 of the second safety communication device 100B checks the user values of the first and second safety communication devices 100A and 100B (operation S201). Here, the user value of the safety communication device 100 may mean any one of a device ID, a MAC address, and a combination thereof, and may be a pre-determined value by setting. Detailed description regarding the user value is the same as that described in relation to Fig. 3.

The second safety communication device 100B may have known the user value of the first safety communication device 100A in advance.

The user value comparing unit 130 of the second safety communication device 100B compares the checked user value of the first safety communication device 100A and the user value of the second safety communication device 100B, and checks which of them is the greater (operation S203).

When it is checked that the user value of the second safety communication device 100B is the greater, the setting unit 140 of the second safety communication device 100B sets the first safety communication device 100A as a respondent and the second safety communication device 100B as an initiator (operation S205). In detail, the setting unit 140 of the second safety communication device 100B may set which of them takes the communication initiative according to the comparison of the user values.

When it is checked that the user value of the second safety communication device 100B is the greater, the second safety communication device 100B operates as an initiator having the communication initiative and the first safety communication device 100A operates as a respondent not having the communication initiative.

When the second safety communication device 100B receives a request message from the first safety communication device 100A (operation S207), the controller 160 of the second safety communication device 100B performs transition on an operation state of the safety communication device 100 to a fail-safe state (operation S209).

In the fail-safe state, the safety communication device 100 stops safety communication until receiving a user input for a reset. In particular, in the fail-safe state, the safety communication device 100 may or may not stop communication other than safety data related communication, but stops at least the safety data related communication. The message transmitting unit 110 of the second safety communication device 100B may transmit a request message to the first safety communication device 100A, and the message receiving unit 150 of the second safety communication device 100B may receive a response message corresponding to the request message from the first safety communication device 100A.

In other words, the second safety communication device 100B may be in an initiator position of having the communication initiative in relationship with the first safety communication device 100A, transmit a request message to the first safety communication device 100A, and receive a response message according to the request message. However, the first safety communication device 100A is in a respondent position of not having the communication initiative in relationship with the second safety communication device 100B, waits for a request message from the second safety communication device 100B, and transmits a response message corresponding to the request message to the second safety communication device 100B when receiving the request message from the second safety communication device 100B.

Furthermore, when it is checked that the user value of the second safety communication device 100B is smaller than that of the first safety communication device 100A, the setting unit 140 of the second safety communication device 100B sets the first safety communication device 100A as an initiator and the second safety communication device 100B as a respondent (operation S215).

In this case, the second safety communication device 100B waits for a request message from the first safety communication device 100A, since it does not have the communication initiative in the relationship with the first safety communication device 100A (operation S217).

When the message receiving unit 150 of the second safety communication device 100B receives the request message from the first safety communication device 100A (operation S219), the message transmitting unit 110 of the second safety communication device 100B transmits a response message corresponding to the received request message to the first safety communication device 100A.

The foregoing method according to embodiments can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, and optical data storage devices , and carrier waves (such as data transmission through the Internet).

As can be seen from the foregoing, the mobile terminal is not limited to the configuration and method of the embodiments described above, but all or some components of the embodiments may be configured to be selectively combined such that various modifications of the embodiments can be implemented.

## Claims

1. A communication method of transmitting and receiving, by a first communication device (100B), a message to and from a second communication device (100A), the method comprising:
checking, by the first communication device (100B), a user value of the second communication device (100A) (S201);
comparing, by the first communication device (100B), the checked user value of the second communication device (100A) with a user value of the first communication device (100B) (S203), wherein the user value of each of the first and second communication device (100B, 100A) is one of a device ID, a Media Access Control, MAC, address and a combination of the device ID and the MAC address; and
setting, by the first communication device (100B), the first communication device (100B) as an initiator having a communication initiative and the second communication device (100A) as a respondent not having the communication initiative if the checked user value of the second communication device (100A) is smaller than the user value of the first communication device (100B) (S205),
**characterized in that**
if the first communication device (100B) set as the initiator receives a request message (S207) from the second communication device (100A) set as the respondent, the first communication device (100B) neglects the request message (S207) and changes an operation state to a state where communication is stopped until a user input for a reset is received (S209), and
if the first communication device (100B) set as the initiator transmits the request message (S211) to the second communication device (100A) set as the respondent, the first communication device (100B) receives a response message (S213) corresponding to the request message (S211) from the second communication device (100A).

2. The communication method according to claim 1, the comparing comprises comparing whether the checked user value of the second communication device (100A) is greater than the user value of the first communication device (100B), and
the setting comprises setting the first communication device (100B) as the respondent and the second communication device (100A) as the initiator, when the checked user value of the second communication device (100A) is greater than the user value of the first communication device (100B).

3. The communication method according to claim 2, further comprising
receiving, by the first communication device (100B) set as the respondent, a request message (S219) from the second communication device (100A) set as the initiator; and
transmitting a response message (S221) corresponding to the received request message (S219) to the second communication device (100A).

4. The communication method according to claim 1, the user value comprises a unique identifier, and the unique identifier is an identifier for setting which takes an initiative between the first and second communication devices.

## Patentansprüche

1. Kommunikationsverfahren zum Übermitteln und Empfangen, durch eine erste Kommunikationsvorrichtung (100B), einer Nachricht an und von einer zweiten Kommunikationsvorrichtung (100A), wobei das Verfahren umfasst:
Überprüfen, durch die erste Kommunikationsvorrichtung (100B), eines Benutzerwertes der zweiten Kommunikationsvorrichtung (100a) (S201);
Vergleichen, durch die erste Kommunikationsvorrichtung (100B), des überprüften Benutzerwertes der zweiten Kommunikationsvorrichtung (100A) mit einem Benutzerwert der ersten Kommunikationsvorrichtung (100B) (S203), wobei der Benutzerwert von sowohl der ersten als auch der zweiten Kommunikationsvorrichtung (100B, 100A) einer der folgenden ist: Vorrichtungs-ID, eine Media-Access-Control, MAC,-Adresse oder eine Kombination der Vorrichtungs-ID und der MAC-Adresse; und
Einstellen, durch die erste Kommunikationsvorrichtung (100B), der ersten Kommunikationsvorrichtung (100B) als eine Initiierende, die eine Kommunikationsinitiative aufweist, und der zweiten Kommunikationsvorrichtung (100A) als eine Antwortende, die die Kommunikationsinitiative nicht aufweist, falls der überprüfte Benutzerwert der zweiten Kommunikationsvorrichtung (100A), kleiner als der Benutzerwert der ersten Kommunikationsvorrichtung (100B), ist (S205),
**dadurch gekennzeichnet, dass**
falls die erste Kommunikationsvorrichtung (100B), die als die Initiierende eingestellt ist, eine Anfragenachricht (S207) von der zweiten Kommunikationsvorrichtung (100A), die als die Antwortende eingestellt ist, empfängt, lehnt die erste Kommunikationsvorrichtung (100B) die Anfragenachricht (S207) ab und ändert einen Betriebszustand in einen Zustand, in welchem Kommunikation gestoppt ist, bis eine Benutzereingabe für eine Wiederherstellung empfangen wird (S209) und
falls die erste Kommunikationsvorrichtung (100B), die als die Initiierende eingestellt ist, die Anfragenachricht (S211) an die zweite Kommunikationsvorrichtung (100A), die als die Antwortende eingestellt ist, übermittelt, empfängt die erste Kommunikationsvorrichtung (100B) eine Antwortnachricht S213), welche der Anfragenachricht (S211) von der zweiten Kommunikationsvorrichtung (100A) entspricht.

2. Kommunikationsverfahren nach Anspruch 1, wobei das Vergleichen ein Vergleichen umfasst, ob der überprüfte Benutzerwert der zweiten Kommunikationsvorrichtung (100A) größer als der Benutzerwert der ersten Kommunikationsvorrichtung (100B) ist, und das Einstellen ein Einstellen der ersten Kommunikationsvorrichtung (100B) als die Antwortende und die zweite Kommunikationsvorrichtung (100A) als die Initiierende umfasst, wenn der überprüfte Benutzerwert der zweiten Kommunikationsvorrichtung (100A) größer als der Benutzerwert der ersten Kommunikationsvorrichtung (100B) ist.

3. Kommunikationsverfahren nach Anspruch 2, ferner umfassend,
Empfangen, durch die erste Kommunikationsvorrichtung (100B), die als die Antwortende eingestellt ist, einer Antwortnachricht (S219) von der zweiten Kommunikationsvorrichtung (100A), die als die Initiierende eingestellt ist; und
Übermitteln einer Antwortnachricht (S221), welche der empfangenen Anfragenachricht (S219) entspricht, an die zweite Kommunikationsvorrichtung (100A).

4. Kommunikationsverfahren nach Anspruch 1, wobei der Benutzerwert eine eindeutige Kennung umfasst, und die eindeutige Kennung eine Kennung ist zum Einstellen welche der ersten oder zweiten Kommunikationsvorrichtung eine Initiative übernimmt.

## Revendications

1. Procédé de communication pour l'émission et la réception, par un premier dispositif de communication (100B), d'un message à destination et en provenance d'un second dispositif de communication (100A), le procédé comprenant :
la vérification, par le premier dispositif de communication (100B), d'une valeur utilisateur du second dispositif de communication (100A) (S201) ;
la comparaison, par le premier dispositif de communication (100B), de la valeur utilisateur vérifiée du second dispositif de communication (100A) avec une valeur utilisateur du premier dispositif de communication (100B) (S203), dans lequel la valeur utilisateur de chacun des premier et second dispositifs de communication (100B, 100A) est l'un parmi un ID de dispositif, une adresse de contrôle d'accès au support, MAC, et une combinaison de l'ID de dispositif et de l'adresse MAC ; et
l'établissement, par le premier dispositif de communication (100B), du premier dispositif de communication (100B) en tant qu'initiateur possédant une initiative de communication et du second dispositif de communication (100A) en tant que répondant ne possédant pas l'initiative de communication si la valeur utilisateur vérifiée du second dispositif de communication (100A) est inférieure à la valeur utilisateur du premier dispositif de communication (100B) (S205),
**caractérisé en ce que**
si le premier dispositif de communication (100B) établi en tant qu'initiateur reçoit un message de demande (S207) en provenance du second dispositif de communication (100A) établi en tant que répondant, le premier dispositif de communication (100B) ignore le message de demande (S207) et change un état de fonctionnement vers un état où la communication est arrêtée jusqu'à ce qu'une entrée utilisateur pour une remise à l'état initial soit reçue (S209), et
si le premier dispositif de communication (100B) établi en tant qu'initiateur émet le message de demande (S211) à destination du second dispositif de communication (100A) établi en tant que répondant, le premier dispositif de communication (100B) reçoit un message de réponse (S213) correspondant au message de demande (S211) en provenance du second dispositif de communication (100A).

2. Procédé de communication selon la revendication 1, où la comparaison comprend une comparaison de ce que la valeur utilisateur vérifiée du second dispositif de communication (100A) est ou non supérieure à la valeur utilisateur du premier dispositif de communication (100B), et l'établissement comprend l'établissement du premier dispositif de communication (100B) en tant que répondant et du second dispositif de communication (100A) en tant qu'initiateur, lorsque la valeur utilisateur vérifiée du second dispositif de communication (100A) est supérieure à la valeur utilisateur du premier dispositif de communication (100B).

3. Procédé de communication selon la revendication 2, comprenant en outre :
la réception, par le premier dispositif de communication (100B) établi en tant que répondant, d'un message de demande (S219) en provenance du second dispositif de communication (100A) établi en tant qu'initiateur ; et
l'émission d'un message de réponse (S221) correspondant au message de demande reçu (S219) à destination du second dispositif de communication (100A).

4. Procédé de communication selon la revendication 1, où la valeur utilisateur comprend un identifiant unique, et l'identifiant unique est un identifiant pour établir celui qui, entre le premier et le second dispositif de communication, prend une initiative.
